# EUROPEAN PATENT SPECIFICATION

(11) **EP 1 741 001 B1**
(45) Date of publication and mention of the grant of the patent: **01.08.2012**
(21) Application number: 04800133.3
(22) Date of filing: 26.11.2004
(51) Int. Cl.: G02F 1/133, G09G 3/34

(54) **LIQUID CRYSTAL DISPLAY APPARATUS**
ANZEIGEVORRICHTUNG MIT FLÜSSIGKRISTALL
APPAREIL A AFFICHEUR A CRISTAUX LIQUIDES

(30) Priority: 27.04.2004 KR 2004028942
(43) Date of publication of application: 10.01.2007
(73) Proprietor: Samsung Electronics Co., Ltd., Yeongtong-gu Suwon-city, Gyeonggi-do 442-742 (KR)
(72) Inventor: KIM, Jin-Bog, Gyeonggi-do 445-984 (KR); KIM, Hyun-Suk, Gyeonggi-do, 443-769 (KR)
(74) Representative: Hylarides, Paul Jacques
(86) International application number: PCT/KR2004/003073
(87) International publication number: WO 2005/103801

(56) References cited:
- WO-A-02/079862
- JP-A- 1 179 913
- JP-A- 2001 135 118
- JP-A- 2004 086 081
- US-A1- 2001 035 853
- US-A1- 2002 070 914

## Description

### FIELD OF THE INVENTION

Apparatuses consistent with the present invention relates to a liquid crystal display (LCD) apparatus, and more particularly, to an LCD apparatus which comprises a backlight array on which a plurality of light emitting devices illuminating an LCD panel with a plurality of colors is arranged to have a predetermined pattern, and controls the backlight array to adjust a white balance.

### BACKGROUND ART

An LCD apparatus uses a liquid crystal cell of which an inherent molecular arrangement is rearranged when a voltage is applied thereto such that the molecular rearrangement causes optical properties such as birefringence, line light, dichroism, light scattering, etc., thereby modulating light and displaying a picture.

As compared with other display apparatus such as a plasma display panel (PDP), a field emission display (FED), etc., the LCD apparatus cannot emit light itself and, instead, adjusts the light passing through an LCD panel, so that a separate light source is needed.

Therefore, the LCD apparatus comprises a backlight unit as well as the LCD panel so as to illuminate the LCD panel in a back thereof. Generally, the backlight unit comprises a lamp used as a light source; a light guided panel changing light emitted from the lamp into a surface light source and enhancing photo-efficiency and brightness; a prism sheet, and an optical sheet such as a polarizer. Additionally, an inverter controls light intensity of the lamp, thereby adjusting the brightness of a picture displayed on the LCD panel.

The lamp used as light source is generally a cathode fluorescent lamp such as a cold cathode fluorescent lamp (CCFL), a hot cathode fluorescent lamp (HCFL), etc., which emits white light.

On the other hand, a phase alternate line (PAL) standard, a sequential couleur a memoire (SECAM) standard, or a national television system committee (NTSC) standard are currently used as a television broadcast standard. As such, a conventional LCD apparatus is designed to support only one among the foregoing broadcast standards, or support two or more among the foregoing broadcast standards. The conventional LCD apparatus adjusts a white balance according to each broadcast standard by applying a predetermined signal-processing algorithm to a video signal according to each broadcast standard.

For example, as a white balance adjusting method according to each broadcast standard, a maximum brightness is calculated by changing contrast gains of a red (R) signal, a green (G) signal and a blue (B) signal contained in the video signal , respectively. Therefore the R, G, B signals are adjusted in contrast at the maximum brightness, thereby adjusting the white balance.

Then, the white balance is adjusted by adjusting the brightness of the R, G, B signals at a minimum brightness of the video signal. Thereafter, a gamma value is set on the basis of the maximum and minimum values of the adjusted G signal and is identically set as to the R and B signals. Then, with regard to gradation of an adjustable range, the set gamma value of the G signal value is fixed and the set gamma values of the R and B signals are varied to thereby adjust the white balance.

However, in the conventional white balance adjusting method based on the cutoff value and the gamma correction of the R, G, B signals, the white balance is adjusted by changing the contrast and the brightness of the video signal, so that a contrast ratio of the conventional LCD apparatus is lowered. Further, the white balance is adjusted on the basis of the maximum and minimum brightness of the respective R, G, B signals, so that there is a loss in a representable brightness level, i.e., brightness.

Such a LCD apparatus is known from publication US 2002/0070914. In the publication is described a backlight for an LCD display comprised of an array of LEDs. The backlight may be driven and controlled by a fast pulse power converter. Further, it is known that the maximum level of light output by LED sub-arrays may be controlled by a user.

Publication WO 02/079862 describes direct backlighting for liquid crystal displays. Shown are a system and method for backlighting a liquid crystal display consisting of a planar array of uniformly distributed light emitting diodes (LEDs) with segmentation, each LED illuminating one or more colors of a picture element (pixel) or group of pixels. Further, it is known that for each application a particular spatial arrangement of RGB LED light sources in direct backlight configuration can be more uniquely suited for the presentation of an image.

Publication US 2001/0035853 shows an assembly of a display device and an illumination system. A backlight system of the system comprises a light-emitting panel and light source associated with the light-emitting panel. The light source may comprise a plurality of light-emitting diodes (LEDs) of at least two different colors. Further, it is known that the light level of the LEDs is controlled by a control circuit, which can be influenced by a user of the assembly.

### DISCLOSURE OF INVENTION

The invention is set forth in claim 1.

Accordingly, it is an aspect of an exemplary embodiment to provide an LCD apparatus, in which a white balance is adjusted without making a loss in a representable brightness level, i.e., brightness, and lowering a contrast ratio.

Another aspect of an exemplary embodiment is to provide an LCD apparatus, in which a white balance is adjusted according to formats of an input video signal.

The foregoing and/or other exemplary aspects of the present invention are also achieved by providing an LCD apparatus with an LCD panel displaying a picture thereon, comprising a backlight array in which a plurality of light emitting devices illuminating the LCD panel with a plurality of colors is arranged to have a predetermined pattern; a backlight driver driving each light emitting device to emit light and to adjust light intensity; and a controller controlling the backlight driver to adjust a white balance of a picture displayed on the LCD panel.

According to an exemplary aspect of the present invention, the light emitting device comprises a red light emitting diode, a green light emitting diode, and a blue light emitting diode.

According to another exemplary embodiment, the LCD apparatus further comprises a format determiner that determines a format of a video signal on the basis of characteristics of the video signal inputted, wherein the controller controls the backlight driver to adjust the white balance of a picture displayed on the LCD panel according to the formats of the video signal determined by the format determiner.

According to an exemplary embodiment, the format determiner determines the format of the video signal on the basis of a horizontal frequency and/or a vertical frequency of the video signal.

According to another exemplary embodiment, the LCD apparatus further comprises a user input unit that generates a first control signal when operated by a user, wherein the controller controls the backlight driver to adjust the white balance of a picture displayed on the LCD panel according to the first control signals from the user input unit.

According to an exemplary embodiment, the controller controls the backlight driver to adjust a white tone of a picture displayed on the LCD panel according to a second control signals from the user input unit. The video signal may have, for example, an NTSC format, a PAL format, and/or a SECAM format.

### BRIEF DESCRIPTION OF THE DRAWINGS

The above and/or other aspects and advantages of the present invention will become apparent and more readily appreciated from the following description of the embodiments, taken in conjunction with the accompany drawings of which:
FIG. 1 is a control block diagram of an LCD apparatus according to an exemplary embodiment of the present invention;
FIG. 2 is a schematic view of a backlight unit of an LCD apparatus according to an exemplary embodiment; and
FIGS. 3 and 4 are control block diagrams of an LCD apparatus according to another exemplary embodiment.

### MODES FOR CARRYING OUT THE INVENTION

Reference will now be made in detail to the exemplary embodiments of the present invention, examples of which are illustrated in the accompanying drawings, wherein like reference numerals refer to like elements throughout. The embodiments are described below in order to explain the present invention by referring to the figures.

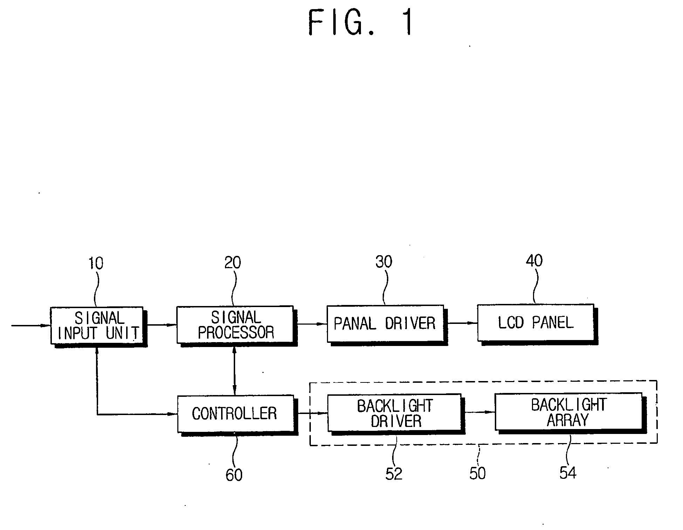

As shown in FIG. 1, an LCD apparatus according to an embodiment of the present invention comprises a signal input unit 10, a signal processor 20, an LCD panel 40, a panel driver 30, a backlight unit 50, and a controller 60 which controls them.

The LCD panel 40 comprises a first substrate formed with a switching device and a pixel electrode; a second substrate formed with R, G, B color filters; and a liquid crystal sandwiched between the first and second substrates. A signal from the panel driver 30 is transmitted to the switching device via a source printed circuit board (PCB) and a gate PCB of the first substrate. Thus an electric signal is applied to the liquid crystal to transmit or intercept light emitted from a backlight array 54 or to adjust an amount of the transmitted light, thereby displaying a picture.

The signal processor 20 transforms a video signal that is input through the signal input unit 10 into a video signal having a format adaptive to a display part, namely the LCD panel 40. According to an embodiment of the present invention, the signal processor 20 comprises a scaler (not shown), a signal transformer (not shown) 15 converting the video signal that was input through the signal input unit 10 into a signal suitable for the scaler.

According to an exemplary embodiment, the signal transformer comprises a tuner tuning in a signal selected among broadcast (radio frequency, RF) signals inputted through an antenna (not shown) or a cable (not shown), and a video decoder transforming the broadcast signal selected by the tuner to a signal having a format suitable for the scaler. Further, the signal transformer may comprise a transition minimized differential signaling (TMDS) receiver, a video decoder, or etc. to process a video signal inputted from an external video apparatus such as a digital video disc (DVD) player, a VCR (video cas set te recorder), or the like. Here, the 5 scaler transforms a video signal outputted from the signal transformer to have a vertical frequency, resolution, aspect ratio, etc. adaptive to an output scale.

The signal input unit 10 receives the video signal and transmits it to the signal processor 20. The signal input unit 10 may have various configurations corresponding to that of the foregoing signal transformer. For example, the signal input unit 10 may comprise an analog input terminal to transmit an input analog video signal to a digital input analog/digital terminal to (A/D) converter, and a support a low-voltage differential signaling (LVDS) or TMDS interface for a digital video signal input. Further, the signal input unit 10 comprises the foregoing antenna or the forgoing cable to receive the broadcast signals through the tuner.

The backlight unit 50 according to an embodiment of the present invention comprises the backlight array 54 and a backlight driver 52, and emits light, thereby allowing the LCD panel 40 to display a picture.

The backlight array 54 comprises a plurality of light emitting devices to illuminate with a plurality of colors. The light emitting device according to an embodiment of the present invention comprises a light emitting diode (LED). Here, the LED separately comprises an R-LED emitting red light, a G-LED emitting green light, and a B-LED emitting blue light. The LED may comprise a united LED which can selectively emit all red light, green light, and blue light.

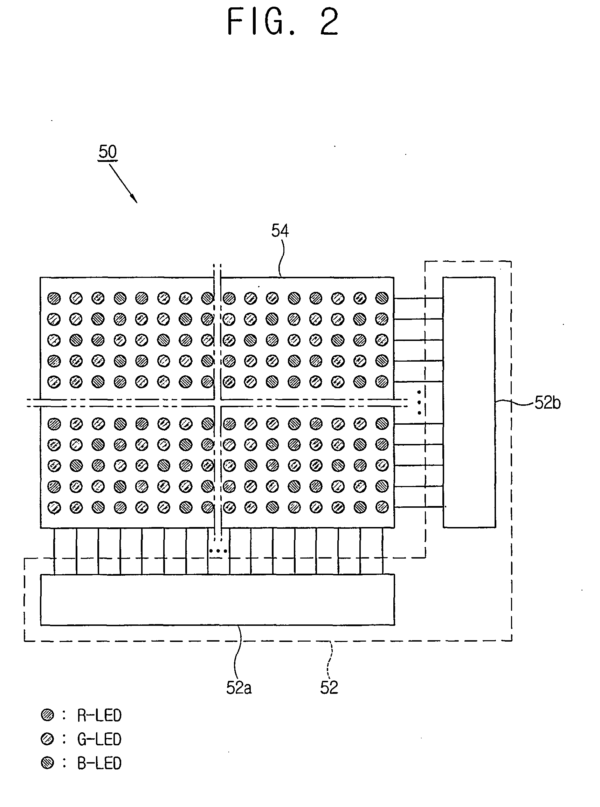

The respective R-, G-, B-LEDs are arranged to have a predetermined pattern on the backlight array 54 as shown in FIG. 2. For example, the respective R-, G-, B-LEDs may have a pattern of "R-G-G-B-R-G-G-B-R-G-G-B ...... " along a transverse direction of the LCD panel 40. The respective

R-, G-, B-LEDs may also have a pattern of "R-G-B ...... ", "R-R-G ...... ", or "R-G-B-B. ..... ", etc, as further examples. That is, the respective R-, G- , B-LEDs are arranged to have an optimum arrangement pattern in consideration of the properties thereof such as the maximum brightness, etc., thereby allowing the LCD panel 40 to display a picture 20 with natural color.

The backlight driver 52 drives the respective R-, G-, B-LEDs to emit light or not emit light and adjust an intensity of the emitted light in response to a control signal of the controller 60. The backlight driver 52 adjusts the intensity of electric current to be applied to the respective R-, G-, B-LEDs, and therefore adjusts the intensity of the light emitted from the respective R-, G-, B-LEDs, thereby adjusting a white balance or a white tone of a picture displayed on the LCD panel 40.

The controller 60 transmits the control signal to the backlight driver 52, wherein the control signal contains information about coordinate values and light intensity of the backlight array 54. On the basis of the control signal, the backlight driver 52 drives the respective R-, G-, B-LEDs to emit light and to adjust the light intensity thereof.

Here, the backlight driver 52 comprises a horizontal driver 52a and a vertical driver 52b in order to drive the respective R-, G-, B-LEDs to emit light and to adjust the light intensity thereof in response to the control signal transmitted from the controller 60. Therefore, the respective R-, G-, B-LEDs are controlled to emit the light and to adjust the light intensity thereof on the basis of combination of signals transmitted from the horizontal driver 52a and the vertical driver 52b.

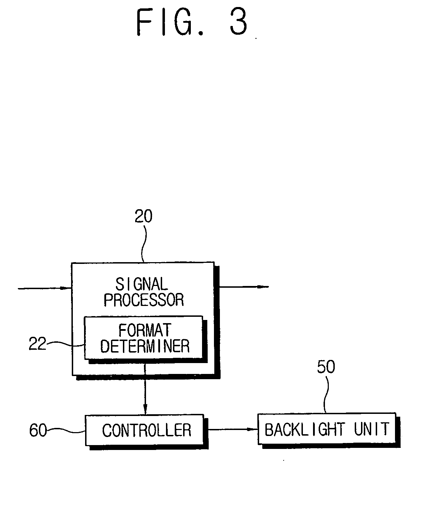

Meanwhile, the LCD apparatus according to an exemplary embodiment, as shown in FIG. 3, comprises a format determiner 22 to determine a format of a video signal inputted through the signal input unit 10 on the basis of inherent properties of the video signal.

According to an embodiment of the present invention, the format determiner 22 determines what kind of the broadcast signal is inputted through the tuner among the broadcast signals, each having an NTSC format, a PAL format, and a SECAM format, for example, on the basis of the characteristics of the broadcast signal, such as a horizontal frequency and/or a vertical frequency. Generally, the broadcast signal according to the NTSC format has a vertical frequency of 525 (lines/frame), and the broadcast signal according to the PAL format has a vertical frequency of 625 (lines/frame), for example. The format determiner 22 counts the vertical frequency of each broadcast signal, thereby determining the format of the broadcast signal inputted through the tuner.

On the basis of the format of the broadcast signal determined by the format determiner 22, the controller 60 transmits the control signal according to a preset white balance corresponding to the determined format, to the backlight driver 52. Thus, the backlight driver 52 drives the respective R-, G-, B-LEDs to emit light and to adjust the light intensity, thereby adjusting a white balance of a picture displayed on the LCD panel 40.

For example, in the case of the broadcast signal of the NTSC format, the picture displayed on the LCD panel 40 should have a white balance of IR:IG:IB=2.6:5.1:1, so that the backlight driver 52 controls the light intensity of the respective R-, G-, B-LEDs to have the foregoing white balance. At this time, the controller 60 sets information about the optimum intensity of the light emitted from the respective R-, G- , B-LEDs in consideration of the optical properties of the respective color filters of the LCD panel 40.

Thus, the broadcast signal passes through the signal processor 20 without a conventional white balance adjustment, so that there is no loss in the brightness level and a contrast ratio is not lowered.

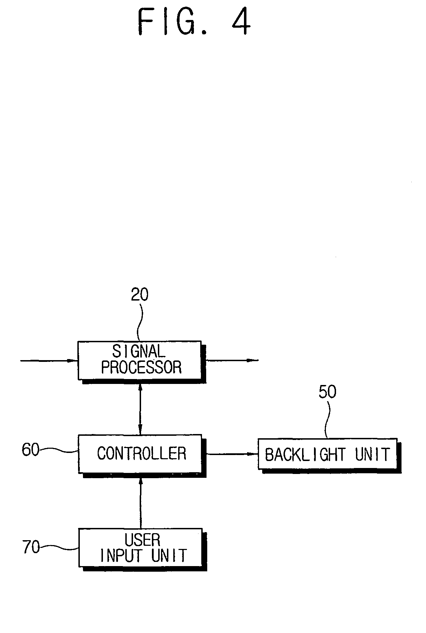

An LCD apparatus according to an exemplary embodiment, as shown in FIG. 4, comprises a user input unit 70 allowing a user to input a control signal. At this time, the controller 60 adjusts the white balance of a picture displayed on the LCD panel 40 in response to the control signal transmitted from the user input unit 70. That is, through the user input unit 70, a user can adjust the white balance of a picture displayed on the LCD panel 40.

Here, the user input unit 70 may comprise a selection button (not shown) provided in front of the LCD apparatus, and a signal generator generating a control signal when the selection button is pressed.
Further, the user input unit 70 may comprise a remote controller, and a remote signal receiver that generates a control signal in response to a remote signal received from the remote controller. The user input unit 70 may have various configurations as long as it can transmit a control signal to the controller 60.

Also, the controller 60 controls the backlight driver 52 to adjust the white balance of a picture displayed on the LCD panel 40 corresponding to the broadcast standard or the external video apparatus selected by a user through the user input unit 70. That is, the controller 60 can employ the selection of a user as a control signal, for example, the selection of the broadcast standard or the external video apparatus.

In the foregoing exemplary embodiment, the white balance is adjusted according to the broadcast standards of the video signal inputted through the tuner. However, the white balance may be previously set according to various formats of the video signal, for example, the formats of the video signal inputted from the external video apparatus such as a computer, a VCR, a DVD, etc., and the format of the video signal inputted through the signal input unit 10 can be determined, thereby adjusting the white balance through the backlight array 54 according to the formats. Therefore, the white balance adjustment according to the present invention is simple as compared with the conventional white balance adjustment performed in the signal processor 20.

In the foregoing embodiment, the white balance of a picture displayed on the LCD panel 40 is adjusted by controlling the backlight unit 50 according to the formats of the video signal or the selections of a user through the user input unit 70. However, a respective R-, G-, B-LED may be adjusted in the light intensity so as to represent the white tone a user prefers.

In the foregoing exemplary embodiment, the LCD apparatus comprises either the format determiner 22 or the user input unit 70. However, the LCD apparatus may comprise both the format determiner 22 and the user input unit 70.

Thus, there are provided the backlight array 54 in which a plurality of light emitting devices illuminating the LCD panel 40 with a plurality of colors is arranged to have a predetermined pattern; the backlight driver 52 driving each light emitting device to emit light and 20 adjust the light intensity; and the controller 60 controlling the backlight driver 52 to adjust the white balance of an picture displayed on the LCD panel 40, so that the white balance is adjusted without making a loss in a representable brightness level, i.e., brightness, and lowering a contrast ratio.

As described above, the present invention provides an LCD apparatus, in which a white balance is adjusted without a loss in a representable brightness level, i.e., brightness, and lowering a contrast ratio.

Further, the present invention provides an LCD apparatus, in which a white balance is adjusted according to formats of an input video signal.

Although a few embodiments of the present invention have been shown and described, it will be appreciated by those skilled in the art that various changes and modifications might be made without departing from the scope of the invention, as defined in the appended claims.

## Claims

1. An LCD apparatus with an LCD panel, comprising: a backlight array in which a plurality of light emitting devices illuminate the LCD panel with a plurality of colors;
a backlight driver arranged to drive the plurality of light emitting devices to emit light and to adjust light intensity; and
a controller arranged to control the backlight driver to adjust a white balance of a picture displayed on the LCD panel,
**CHARACTERIZED IN THAT**
the LCD apparatus further comprises a format determiner arranged to determine a format of an input video signal based on characteristics of the video signal, wherein the controller is arranged to control the backlight driver to adjust the white balance of the picture displayed on the LCD panel according to the format of the video signal as determined by the format determiner.

2. The LCD apparatus according to claim 1, wherein the light emitting devices comprise a red light emitting diode, a green light emitting diode, and a blue light emitting diode.

3. The LCD apparatus according to claim 1 or 2, wherein the format determiner is arranged to determine the format of the video signal based on a horizontal frequency and/or a vertical frequency of the video signal.

4. The LCD apparatus according to claim 2, further comprising a user input unit arranged to generate a first control signal when operated by a user, wherein the controller is arranged to control the backlight driver to adjust the white balance of the picture displayed on the LCD panel according to the first control signal from the user input unit.

5. The LCD apparatus according to claim 4, wherein the controller is arranged to control the backlight driver to adjust a white tone of the picture displayed on the LCD panel according to a second control signal from the user input unit.

6. The LCD apparatus according to claim 4, wherein the video signal is an NTSC format, a PAL format, or a SECAM format.

7. The LCD apparatus according to claim 1 or 2, further comprising a user input unit arranged to generate a first control signal when operated by a user, wherein the controller is arranged to control the backlight driver to adjust the white balance of the picture displayed on the LCD panel according to the first control signal from the user input unit.

8. The LCD apparatus according to claim 7, wherein the controller is arranged to control the backlight driver to adjust a white tone of the picture displayed on the LCD panel according to a second control signal from the user input unit.

9. The LCD apparatus according to claim 7, wherein the video signal is an NTSC format, a PAL format, or a SECAM format.

10. The LCD apparatus according to claim 1, wherein the plurality of light emitting devices are arranged to have a predetermined pattern.

## Patentansprüche

1. LCD-Vorrichtung mit einer LCD-Tafel, umfassend: eine Hintergrundbeleuchtungsanordnung, in der eine Mehrzahl Licht emittierender Einrichtungen die LCD-Tafel mit einer Mehrzahl von Farben beleuchtet;
einen Hintergrundbeleuchtungstreiber, der eingerichtet ist zum Ansteuern der Mehrzahl Licht emittierender Einrichtungen, um Licht zu emittieren und Lichtintensität einzustellen; und
einen Controller, der eingerichtet ist zum Steuern des Hintergrundbeleuchtungstreibers, um einen Weißabgleich eines auf der LCD-Tafel angezeigten Bildes einzustellen,
**DADURCH GEKENNZEICHNET, DASS**
die LCD-Vorrichtung weiterhin eine Formatbestimmungseinrichtung umfasst, die eingerichtet ist zum Bestimmen eines Formats eines Eingangsvideosignals auf Grundlage von Charakteristiken des Videosignals, wobei der Controller eingerichtet ist zum Steuern des Hintergrundbeleuchtungstreibers, um den Weißabgleich des auf der LCD-Tafel angezeigten Bildes in Übereinstimmung mit dem Format des Videosignals, wie durch die Formatbestimmungseinrichtung bestimmt, einzustellen.

2. LCD-Vorrichtung nach Anspruch 1, wobei die Licht emittierenden Einrichtungen eine rotes Licht emittierende Diode, eine grünes Licht emittierende Diode und eine blaues Licht emittierende Diode umfassen.

3. LCD-Vorrichtung nach Anspruch 1 oder 2, wobei die Formatbestimmungseinrichtung eingerichtet ist zum Bestimmen des Formats des Videosignals auf Grundlage einer Horizontalfrequenz und/oder einer Vertikalfrequenz des Videosignals.

4. LCD-Vorrichtung nach Anspruch 2, die weiterhin eine Benutzereingabeeinheit umfasst, die eingerichtet ist zum Erzeugen eines ersten Steuerungssignals bei Bedienung durch einen Benutzer, wobei der Controller eingerichtet ist zum Steuern des Hintergrundbeleuchtungstreibers, um den Weißabgleich des auf der LCD-Tafel angezeigten Bildes in Übereinstimmung mit dem ersten Steuerungssignal aus der Benutzereingabeeinheit einzustellen.

5. LCD-Vorrichtung nach Anspruch 4, wobei der Controller eingerichtet ist zum Steuern des Hintergrundbeleuchtungstreibers, um einen Weißton des auf der LCD-Tafel angezeigten Bildes in Übereinstimmung mit einem zweiten Steuerungssignal aus der Benutzereingabeeinheit einzustellen.

6. LCD-Vorrichtung nach Anspruch 4, wobei das Videosignal ein NTSC-Format, ein PAL-Format oder ein SECAM-Format ist.

7. LCD-Vorrichtung nach Anspruch 1 oder 2, die weiterhin eine Benutzereingabeeinheit umfasst, die eingerichtet ist zum Erzeugen eines ersten Steuerungssignals bei Bedienung durch einen Benutzer, wobei der Controller eingerichtet ist zum Steuern des Hintergrundbeleuchtungstreibers, um den Weißabgleich des auf der LCD-Tafel angezeigten Bildes in Übereinstimmung mit dem ersten Steuerungssignal aus der Benutzereingabeeinheit einzustellen.

8. LCD-Vorrichtung nach Anspruch 7, wobei der Controller eingerichtet ist zum Steuern des Hintergrundbeleuchtungstreibers, um einen Weißton des auf der LCD-Tafel angezeigten Bildes in Übereinstimmung mit einem zweiten Steuerungssignal aus der Benutzereingabeeinheit einzustellen.

9. LCD-Vorrichtung nach Anspruch 7, wobei das Videosignal ein NTSC-Format, ein PAL-Format oder ein SECAM-Format ist.

10. LCD-Vorrichtung nach Anspruch 1, wobei die Mehrzahl Licht emittierender Einrichtungen so eingerichtet ist, dass sie ein vorgegebenes Muster aufweist.

## Revendications

1. Appareil à écran à cristaux liquides comportant un panneau d'affichage à cristaux liquides, comprenant :
une matrice de rétroéclairage dans laquelle une pluralité de dispositifs électroluminescents illuminent le panneau d'affichage à cristaux liquides en une pluralité de couleurs ;
un pilote de rétro-éclairage agencé pour piloter la pluralité de dispositifs électroluminescents de manière à ce qu'ils émettent de la lumière et à régler l'intensité lumineuse ; et
un organe de commande agencé pour commander le pilote de rétro-éclairage afin de régler la balance des blancs d'une image affichée sur le panneau d'affichage à cristaux liquides,
**CARACTÉRISÉ EN CE QUE**
l'appareil à écran à cristaux liquides comprend en outre un dispositif de détermination de format agencé pour déterminer le format d'un signal vidéo d'entrée en se fondant sur les caractéristiques du signal vidéo, dans lequel l'organe de commande est agencé pour commander le pilote de rétro-éclairage de manière à régler la balance des blancs de l'image affichée sur le panneau d'affichage à cristaux liquides conformément au format du signal vidéo déterminé par le dispositif de détermination de format.

2. Appareil à écran à cristaux liquides selon la revendication 1, dans lequel les dispositifs électroluminescents comprennent une diode électroluminescente rouge, une diode électroluminescente verte, et une diode électroluminescente bleue.

3. Appareil à écran à cristaux liquides selon la revendication 1 ou 2, dans lequel le dispositif de détermination de format est agencé pour déterminer le format du signal vidéo en fonction d'une fréquence horizontale et/ou d'une fréquence verticale du signal vidéo.

4. Appareil à écran à cristaux liquides selon la revendication 2, comprenant en outre une unité d'entrée utilisateur générant un premier signal de commande lorsqu'elle est manipulée par un utilisateur, l'organe de commande étant agencé pour commander le pilote de rétro-éclairage de manière à régler la balance des blancs de l'image affichée sur le panneau d'affichage à cristaux liquides conformément au premier signal de commande émis par l'unité d'entrée utilisateur.

5. Appareil à écran à cristaux liquides selon la revendication 4, dans lequel l'organe de commande est agencé pour commander le pilote de rétro-éclairage de manière à régler une tonalité de blanc de l'image affichée sur le panneau d'affichage à cristaux liquides conformément à un second signal de commande émis par l'unité d'entrée utilisateur.

6. Appareil à écran à cristaux liquides selon la revendication 4, dans lequel le signal vidéo est un format NTSC, un format PAL, ou un format SECAM.

7. Appareil à écran à cristaux liquides selon la revendication 1 ou 2, comprenant en outre une unité d'entrée utilisateur agencée pour générer un premier signal de commande lorsqu'elle est manipulée par un utilisateur, l'organe de commande étant agencé pour commander le pilote de rétro-éclairage de manière à régler la balance des blancs de l'image affichée sur le panneau d'affichage à cristaux liquides conformément au premier signal de commande émis par l'unité d'entrée utilisateur.

8. Appareil à écran à cristaux liquides selon la revendication 7, dans lequel l'organe de commande est agencé pour commander le pilote de rétro-éclairage de manière à régler la tonalité de blanc de l'image affichée sur le panneau d'affichage à cristaux liquides conformément à un second signal de commande émis par l'unité d'entrée utilisateur.

9. Appareil à écran à cristaux liquides selon la revendication 7, dans lequel le signal vidéo est un format NTSC, un format PAL, ou un format SECAM.

10. Appareil à écran à cristaux liquides selon la revendication 1, dans lequel la pluralité de dispositifs électroluminescents est agencée selon un schéma prédéterminé.
